# EUROPEAN PATENT SPECIFICATION

(11) **EP 3 983 308 B1**
(45) Date of publication and mention of the grant of the patent: **02.08.2023**
(21) Application number: 20744151.0
(22) Date of filing: 12.06.2020
(51) Int. Cl.: B65D 81/20, B65D 85/34, B65D 85/50

(54) **PACKAGE FOR PRESERVING RESPIRING PRODUCE AND METHOD**
VERPACKUNG ZUR KONSERVIERUNG VON ATMENDEN WAREN UND VERFAHREN
EMBALLAGE POUR LA CONSERVATION DE PRODUITS RESPIRANTS ET PROCÉDÉ ASSOCIÉ

(30) Priority: 12.06.2019 NL 2023294; 27.01.2020 NL 2024761
(43) Date of publication of application: 20.04.2022
(73) Proprietor: Perfo Tec B.V., 3449 JB Woerden (NL)
(72) Inventor: GROENEWEG, Bastiaan Rinke Antony, 3449 JB Woerden (NL); VAN DE LOO, Paulus Josephus Benedictus Maria, 3449 JB Woerden (NL)
(74) Representative: De Vries & Metman
(86) International application number: PCT/NL2020/050376
(87) International publication number: WO 2020/251358

(56) References cited:
- EP-A1- 2 294 923
- WO-A1-2009/003675
- WO-A1-2014/129904
- WO-A1-2017/220801
- WO-A1-2018/147736
- DE-T2- 69 901 477
- US-A1- 2010 151 166
- US-A1- 2010 221 393
- MARCELLA MASTROMATTEO ET AL: "A new approach to predict the mass transport properties of micro-perforated films intended for food packaging applications", JOURNAL OF FOOD ENGINEERING, BARKING, ESSEX, GB, vol. 113, no. 1, 18 May 2012 (2012-05-18), pages 41-46, XP028504513, ISSN: 0260-8774, DOI: 10.1016/J.JFOODENG.2012.05.029 [retrieved on 2012-05-27] cited in the application
- MARIO SCETAR ET AL: "Trends in Fruit and Vegetable Packaging - a Review", CROATIAN JOURNAL OF FOOD TECHNOLOGY, BIOTECHNOLOGY AND NUTRITION, vol. 5, no. 3-4, 1 January 2010 (2010-01-01), pages 69-86, XP055587697, ISSN: 1847-3423 cited in the application
- CHEN MO ET AL: "Effects of Temperature and Humidity on the Barrier Properties of Biaxially-oriented Polypropylene and Polyvinyl Alcohol Films Recommended Citation", JOURNAL OF APPLIED PACKAGING RESEARCH, vol. 6, no. 1, 1 January 2014 (2014-01-01) , pages 40-46, XP055298191, DOI: 10.14448/japr.Ol.0004

## Description

### TECHNICAL FIELD

The present disclosure relates to a package for preserving respiring produce contained in the package, in particular vegetables, fruit, flowers and herbs, comprising a packaging material, in particular a polymer film, provided with at least one perforation enabling gas exchange, in particular the exchange of oxygen and carbon dioxide, with the outside atmosphere surrounding the package. The invention further relates to a method for manufacturing such a package.

### BACKGROUND

Shelf life of natural products is of interest to producers, sellers, re-sellers and consumers alike. In the case of food stuffs, like vegetables, fruit, herbs and/or spices, taste, flavour, ripeness and/or structural properties (e.g. firmness) are particularly relevant, as well as inhibiting decay processes and/or growth of pathogens. In the case of flowers, particular concern is the so-called vase life, the time cut flowers and/or flowers in a bouquet retain acceptably pleasing appearance and/or fragrance on display. Typically, the vase life is a few days up to about two weeks at most. Shelf life and vase life are affected by initial produce quality and by conditions of storage and/or transport.

Natural produce such as flowers, vegetables, fruits and/or herbs tend to respire after being harvested, involving inter alia to a consumption of oxygen and a generation of carbon dioxide. The respiration continues for prolonged periods, in particular if the produce has undergone little to no processing, e.g. having been washed and possibly peeled and/or chopped up, but otherwise fresh and uncooked. When such produce is packaged, the atmosphere within the package is affected by the respiring produce. Conversely, an atmosphere surrounding natural produce affects the respiration, maturation, aging and/or deterioration of the packed produce. It has therefore become customary to package fresh produce in packages with a modified atmosphere (Modified Atmosphere Package or MAP) or with a controlled atmosphere (Controlled Atmosphere Package or CAP). In MAP the produce is packaged, and an artificial gas mixture is used to establish a distinct interior atmosphere in the package, which may however change later on due to the respiration of the packed produce. In CAP the produce is packaged, and the composition of the package atmosphere is controlled by including an active absorber for an atmosphere component, e.g. an oxygen scavenger and/or by adapting transmission of the packaging material to allow exchange with an exterior atmosphere outside the package, e.g. by perforating the material. Modified- and controlled atmosphere packaging (MAP/CAP) preserve produce quality by reducing the aerobic respiration rate while avoiding anaerobic processes that may lead to adverse changes, e.g. in one or more of colour, texture, flavour and aroma.

Another aspect of fresh and/or respiring produce is, on the one hand, the production of water vapour by the produce and, on the other hand, sensitivity to humidity by the produce and/or live contaminants (e.g. microbes, insects, parasites, fungi, ...). Therefore, humidity of the atmosphere inside a package should also preferably be controlled.

In view of the above, different packages and packaging materials have been developed, e.g. see WO 2016/071922 or WO 2016/003899. It is further noted that various aspects of modified /controlled atmosphere packaging are disclosed in US 7,083,837 and in P.V. Mahajan et al., "An interactive design of MA-packaging for fresh produce", in: "Handbook of food science, technology and engineering", Y.H. Hui (ed), CRC Press (Taylor & Francis Group) 2006.

Additional aspects related to packaging materials and/or packaging of respiring produce are disclosed in EP 2 294 923, US 2010/221393, WO 2017/220801, US 2010/151166, WO 2018/147736, WO 2009/003675, DE 699 01 477, and in M. Mastromatteo, et al. "A new approach to predict the mass transport properties of micro-perforated films intended for food packaging applications", J. Food. Eng. 113 (1):41-46 (2012-05-18), DOI: 10.1016/J.JFOODENG.2012.05.029; and M. Scetar, et al, "Trends in Fruit and Vegetable Packaging - a Review", Croatian J. Food Tech., Biotech. Nutr., 5(3-4):69-86 (2010), ISSN: 1847-3423

However, in view of the ongoing strive to improve produce quality and to prevent spoilage and loss, further improvements are still desired.

### SUMMARY

Herewith a package for preserving respiring produce is provided and specified in the appended claims.

In an aspect, a package for preserving respiring produce contained in the package, in particular vegetables, fruit, herbs, spices and/or flowers, is provided.

The package defines a package volume for containing a portion of the produce and a package atmosphere, and comprises a packaging material, in particular a polymer film, provided with at least one perforation enabling gas exchange with the atmosphere surrounding the package to form the package into a Controlled Atmosphere Package (CAP).

The packaging material has a Water Vapour Transmission Rate (WVTR), a carbon dioxide transmission rate (CO₂TR) and an oxygen transmission rate (O₂TR), wherein the Water Vapour Transmission Rate (WVTR) of the packaging material is in a range of 100 - 1200 ml/(m².24 hrs), the carbon dioxide transmission rate (CO₂TR) of the packaging material is larger than 1000 ml/(m².24 hrs) in particular larger than 5000 ml/(m².24 hrs), more in particular being in a range of 1000 - 15000 ml/(m².24 hrs) while larger than 1000 ml/(m2.24 hrs), such as 5000 - 15000 ml/(m².24 hrs), and a ratio β = CO₂TR / O₂TR > 4, in particular being in a range of 4 - 25 while larger than 4 .

The packaging material provides, compared to presently available packages, in particular a high transmission rate for water vapour and a high ratio β between the transmission rates for oxygen and carbon dioxide.

A high WVTR reduces humidity build-up in the package atmosphere, and in particular it reduces formation of water films and/or droplets in the package atmosphere, e.g. on surfaces within the package, such as on an inside surface of the packaging material. This reduces fungal growth and/or other decay processes. On the other hand, a too high WVTR causes decay by losing turgor, drying out and/or withering of the produce, which also is unacceptable. The presently provided values have proven to be suitable for CAP of all commercially relevant produce.

A high CO₂TR facilitates escape of carbon dioxide and thus reduces elevating CO₂ concentration in the package atmosphere, thus reducing or preventing risks of anaerobic decay processes. Further, CO₂ may dissolve in water, from which it may re-enter the package atmosphere later on, and with which it may react to form carbonic acid which in turn may affect taste and/or composition of food produce stored in the package.

When the package is closed, e.g. sealed, comprising respiring produce, the oxygen in the package atmosphere is consumed and the oxygen concentration decreases. Closing the bag may also be done by hand with a closing device (e.g. tie, clip, tape, elastic band, etc.) and/or by folding and/or knotting. Also or alternatively, the package may be (further) closed by other techniques, e.g. by use of adhesives and/or by welding which may comprise using a hand-held device and/or an automated device which may be comprised in the apparatus. The package may be closed immediately after filling or produce may be filled in the package and the package being closed after a further treatment step and/or conditioning step, e.g. cooling.

A too-low O₂-concentration may accelerate anaerobic decay processes; however, a too high concentration enables prolonged development and aging of the produce. Both should be prevented. The oxygen transmission rate O₂TR of the packaging material enables an inflow of oxygen into the package atmosphere, preventing total consumption of the oxygen. However, a too high O₂TR precludes control over the oxygen transmission rate of the package as whole by perforation.

An oxygen concentration in a range of typically 1-10%, preferably 2-8% e.g. 3-7% more preferably 4-6% may be preferred to decelerate aging processes (also known as "putting the produce to sleep") and maximise shelf life. Such concentrations may be achieved by the at least one perforation forming the package as a CAP. By the at least one perforation the oxygen transmission rate of the package as a whole can be increased.

Each perforation affects the transmission rate of the package as a whole for oxygen, carbon dioxide and ethylene. The open area of microperforations for CAP affects the water vapour transmission rate of the package as a whole only insignificantly. The high ratio β facilitates control over the oxygen concentration and the carbon dioxide concentration in the package atmosphere by perforating the material.

Thus increased inflow of oxygen and increased outflow of carbon dioxide may be balanced by the perforation(s).

The presently provided combination of values for the ratio β, the high WVTR and the CO₂TR has been found to enable extending shelf life of respiring produce in CAP packages by several days. This amounts to an extension of shelf life over 10-20% compared to a present day optimum polymer film and well over 4 times over standard fresh produce packaging polymer films.

In more detail, in CAP, the oxygen concentration in the package atmosphere may be lowered to a reduced oxygen concentration in order to slow down aging processes, while at the same time ensuring a minimum equilibrium oxygen concentration. Also or alternatively, the carbon dioxide concentration in the package atmosphere may be controlled to a desired maximum value. Thus, aging, maturation and/or decay are slowed down and in particular anaerobic processes such as bacterial growth are prevented. Generally, it is preferred that the equilibrium oxygen concentration and/or carbon dioxide concentration are reached as soon as possible. For that, a combination of CAP and MAP may be used. For the MAP, the initial package atmosphere may be established at or near the time of closing the package by creating in and/or introducing into the package volume an atmosphere modification gas or -gas mixture differing from the ambient atmosphere.

It is known that different species of produce and different varieties within a produce species exhibit different respiration rates, documented in literature. The total open area of the perforations for CAP should be determined based on the produce (to be) packed and the transmission properties of the packaging material itself; the transmission rate of the package for each substance is formed by the combination of the transmission rate of the packaging material and the transmission rate through the perforations for the respective substance.

For prolonged storage, most produce benefit from both a low CO₂-concentration and a low O₂-concentration in the package atmosphere, wherein the O₂-concentration is in the range of about 1-10% by volume ("%vol"), preferably in a range 3-7 %vol. In order to maintain such low O₂-concentration, the perforation(s) in the package should provide an open area configured to control inflow of oxygen into the package volume, in particular establishing a minimum inflow to prevent anaerobicity and a maximum inflow to ensure the low oxygen concentration slowing down the metabolic processes of the produce (a.k.a. "putting the produce to sleep"). This restriction to the open area of the perforation(s) inherently restricts outflow of CO₂ from the package through the perforations, considering that perforations are a-selective with respect to O₂ and CO₂: typically the ratio for the flow of CO₂:O₂ for 1 small laser perforation is approximately 1. The perforations in the package therefore determine simultaneously an upper limit for outflow of CO₂ and inflow of O₂. Manufacturing a CAP package thus forces a compromise between on the one hand raising the outflow of CO₂, which is desired, and on the other hand raising the inflow of O₂, which is undesired.

A high CO₂TR of the packaging material is therefore beneficial in establishing an improved concentration balance between O₂ and CO₂ in the package atmosphere, since this raises the transmission rate for CO₂ for the CAP package as a whole.

It has been found that as a rule-of-thumb, for present-day packaging films for fresh respiring produce, generally in CAP the concentrations of O₂ and CO₂ together make up about 21-23 %vol of the package atmosphere ({concentration O₂ [%vol]} + {concentration CO₂ [%vol]} = {concentration combined} = ca. 21-23 %vol). This has been found to be mainly due to their ratio β = CO₂TR / O₂TR being in a range of about 1-3. In the presently provided package, the packaging material provides an increased ratio β = CO₂TR / O₂TR, so that the CO₂TR of the material significantly outweighs the O₂TR of the material. The high CO₂TR of the packaging material facilitates escaping the aforementioned rule of thumb and achieving a comparably lower concentration of CO₂ in the combined concentration; also the open area of the one or more perforations may be reduced, reducing the inflow of O₂ and therefore the equilibrium concentration of O₂ in the package atmosphere without significantly reducing the outflow of CO₂, i.e. without significantly increasing the equilibrium concentration of CO₂ in the package atmosphere.

At the same time, the high WVTR ensures a low water vapour concentration in the package atmosphere, reducing absorption of CO₂ in water and/or adverse reactions of CO₂ with water, in particular acid-forming.

The combination of the increased values of CO₂TR and ratio β together with the high WVTR has been found to make it possible to reduce the oxygen level inside CAP by reducing the size and number of micro perforations, without, or at least reducing, risks that the CO₂ concentration will reach a harmful level and/or a harmful effect for the packed Fresh Produce.

Good results may be obtained for example with films comprising biodegradable polymers, polyhydroxyalkanoates (PHAs), poly-3-hydroxybutyrate (PHB), polyhydroxyvalerate (PHV), polyhydroxyhexanoate (PHH), cellulose acetate, nitrocellulose, polylactic acid (PLA), polybutylene succinate (PBS), polycaprolactone (PCL), polyanhydrides, copolyesters, etc. Other suitable materials comprise ethylene-vinyl alcohol polymers and/or cellulose nanocrystals. Films of polyurethane, due to its high elasticity, and of polystyrene, due to its brittleness, are found unsuitable for reliable perforation and lack robustness for use as packaging material, for produce in general.

The film may for example be a partly or fully laminated structure, or a single layer substrate, for instance multi-layer paper laminate, polymeric laminate, single layer polymeric films etc. A layer of metallization may also be provided. A laminate may be preferred for sealing and/or welding, e.g. for closing a package. This may in particular be advantageous for tray sealing packages wherein a tray may have one composition and a closing film (usually a top film) may have another composition, in particular the tray is a relatively thick part and the closing film is a packaging material as specified herein. A laminate may be laminated fully or partly providing regions of more and less layers. The film can for example be made by extrusion processes such as blowing, casting or calendaring processes. Extrusion and/or blowing are preferred for manufacturing the film as a tubular material.

The produce may be pure, e.g. a single species of fruit or vegetable, or it may be a mixture, e.g. a mixed flower bouquet, a vegetable mixture and/or a herb mixture, etc.

Although a high WVTR may be generally preferred, too high WVTR may cause drying out of the produce which may be undesired. A well selected WVTR may optimise shelf life of the produce. It has been found that for several species of produce, an optimum WVTR may be desired in view of the open area of the at least one perforation to form the CAP.

The packaging material may therefore have, in particular for produce having a relatively low transpiration rate such as blueberries, chicory, grapes, pomegranate, etc., a Water Vapour Transmission Rate (WVTR) in a range of 100 - 1000 ml/(m².24 hrs), preferably in a range of 150 - 800 ml/(m².24 hrs), more preferably in a range of 250- 700 ml/(m².24 hrs), most preferably in a range of 400 - 600 ml/(m².24 hrs).

In another embodiment, the packaging material may have, in particular for produce having a relatively high transpiration rate such as asparagus, avocado, peas, snap beans, mango, a Water Vapour Transmission Rate (WVTR) in a range of 100 - 1000 ml/(m².24 hrs), preferably in a range of 700-1100 ml/(m².24 hrs), more preferably in a range of 800 - 1100 ml/(m².24 hrs), most preferably in a range of 900 - 1000 ml/(m².24 hrs).

The packaging material may have a carbon dioxide transmission rate (CO₂TR) in a range of 1000 - 12000 ml/(m².24 hrs) while larger than 1000 ml/(m2.24 hrs), preferably being in a range of 2000 - 10000 ml/(m².24 hrs), more preferably in a range of 4000 - 9000 ml/(m².24 hrs), most preferably in a range of 5000 - 8500 ml/(m².24 hrs).

For other produce, preferred ranges may be 5000 - 12000 ml/(m².24 hrs), preferably in a range of 6000 - 10000 ml/(m².24 hrs), more preferably in a range of 7000 - 9000 ml/(m².24 hrs), most preferably in a range of 7500 - 8500 ml/(m².24 hrs), e.g. 7000 - 9000 ml/(m².24 hrs).

Most aging processes lead to CO₂ production, causing a build-up in the package atmosphere. An elevated CO₂-concentration may accelerate anaerobic decay processes and should be prevented. However, a too high CO₂TR may prevent a desired deceleration of metabolic processes and associated extension of shelf life. The presently provided ranges are preferred to meet such balance.

The packaging material may have an oxygen transmission rate (O₂TR) in a range of 500 - 4000 ml/(m².24 hrs), preferably in a range of 750 - 4000 ml/(m².24 hrs), more preferably in a range of 900 - 3000 ml/(m².24 hrs), most preferably in a range of 1000 - 2500 ml/(m².24 hrs).

Respiration and most aging processes lead to O₂ consumption, causing a depletion in the package atmosphere. A high O₂TR facilitates fine control of oxygen influx, e.g. by precisely establishing a ratio of the packaging material area and the open area of the one or more perforations.

As explained in WO 2014/129904, it has been found by the applicant that respiration of produce (and therefore the optimum concentrations of one or more of oxygen, carbon dioxide and ethylene in CAP) is not, as customarily thought, only dependent on particular produce species, but is specific for each batch of produce. Rather, variations in respiration between crops of a single species due to seasonal effects, handling and/or transport, or even due to different locations on a field, may outweigh differences between different species. Therefore the proper transmission rate for the package should preferably be established anew for each batch of produce to be packed, in particular for subsequent batches of the same species of produce or the same combination of species, e.g. mixed flower bouquets, mixtures of salads, fruits, vegetables and/or herbs, and the transmission rate for the package should be governed for the decisive component by providing the corresponding open area of the one or more perforations. A critical respiration ratio H between consumption and/or creation of predetermined atmosphere gases (e.g. O₂, CO₂, ethylene, water, ...) may be established and used to determine for the control of which component (e.g. O₂ or CO₂) the open area of the perforation(s) has to be made in order to provide optimum packaging conditions / shelf life.

E.g., in case the one or more perforations are made to control the concentration of oxygen in the package atmosphere, the high CO₂TR enables both a relatively small O₂ introduction and a relatively high COz-exhaust from the package. The high ratio β may further cause that the aforementioned critical respiration ratio H is shifted so that providing the one or more perforations in view of controlling oxygen may be suitable over a larger variation of respirations. This may obviate adjustment of a perforation system and/or possibly associated (re-) calibration. Thus, manufacturing speed of packaging material and/or packages may increase.

The packaging material may have a ratio β = CO₂TR / O₂TR larger than 4, and while larger than 4 in particular in a range of 4 - 25 in particular in a range 4 - 20, more in particular in a range 4 - 10, most preferably in a range 4 - 8, or 4,0 - 8,0, e.g. in a range 5 - 7 or 5,0 - 7,0.

The higher the ratio β, the better an independent control over the oxygen concentration and the carbon dioxide concentration in the package atmosphere may be achieved by perforating the material. However, a too high ratio β may hinder "putting the produce to sleep" by preventing CO₂-mediated slowing down of metabolism in the species.

A CO₂TR, e.g. in a range 10000 - 40000, in particular in a range 10000 - 35000 preferably in a range 15000 - 30000 or 20000 - 30000 may be desired for some types of produces and/or applications. An O₂TR in a range 1000-4000 ml/(m².24 hrs) and/or a ratio β in a range 8 - 25, like 10 - 25 or even 12 - 20, may be desired for some types of produces and/or applications.

Such high-transmission materials may be particularly suitable and/or desired for packaging of produce for transport and/or storage with interrupted or non-constant cooling. This may include one or more of shallow cooling (little difference to ambient temperatures), temperature variations and/or cooling to different temperatures, interrupted cooling and repeated cooling instances. The same holds, also or alternatively, for produce packages that are repeatedly opened. Typical examples comprise short-time packaging, overnight storage and/or transport, interrupted supply chains, supply chains without comprehensive and/or reliable temperature control, sorting and/or re-packing, produce (spot) checks and/or quality control, market place sales (market stalls and/or -halls), moving market sales on different locations with overnight packaging and transport to another location, live auctions and/or expositions showing produce and/or providing the produce accessible for testing, etc.

In such cases such high transmission packaging, in particular for wholesale portions and/or bulk portions, like pallet bags, liner bags and/or pallet covers or -wraps, bale covers or -wraps, etc., may be particularly effective in slowing down metabolic processes of the produce and preventing undesired processes like drying, anaerobe processes and/or formation of water droplets inside the package. In some cases cooling may be shallower than presently used and/or be obviated altogether. This enables significant reduction of energy consumption and it may facilitate transport and/or storage.

The packaging material may be a polymer film having a thickness in a range of 10-200 micrometres, preferably in a range of 15-150 micrometres, more preferably in a range of 20-100 micrometres, most preferably in a range of 20-75 micrometres, e.g. in a range of 25-50 micrometres such as 25-40 micrometres.

The thickness of the film determines inter alia its mechanical strength (lower strength for thinner material) and/or its transmission rates MVTR, CO₂TR and O₂TR. The film thickness may also, in combination with the size and shape of the perforation, determine the transmission rate of one or more gas components through a perforation. With decreasing thickness of the film its mechanical robustness decreases whereas the transmission rates increase. With increasing thickness of the film, its mechanical robustness increases and the transmission rates decrease. It is noted that the relationship between (decrease or increase of) material thickness and (decrease or increase of) transmission rates for atmospheric components may vary between different atmospheric components, in such cases the ratio β of the packaging material may depend on the thickness of the material. Also, some materials may absorb atmospheric components, in particular water vapour; the total absorption may relate to the amount of packaging material, and thus to the thickness, and the absorption and/or an absorbed amount may affect the transmission rate of the material. Moreover, manufacturing costs and material costs may depend on the thickness of the film; material cost may scale with film thickness whereas manufacturing costs may increase for very thin and very thick films. The thickness of the packaging material may therefore be optimized to several parameters and still provide the desired transmission rates.

A thickness in a range of 20-50 micrometre, e.g. about 25 or about 40 micrometres may be particularly suitable for wholesale and retail consumer packages; both for bags and/or for tray sealing films. Larger thicknesses, e.g. 50-100 micrometres may be particularly suitable for wholesale packages as a lining, even larger 60-120 micrometres may be particularly suitable for packaging wholesale containers and/or entire stacks of (wholesale) containers and/or pallets on an exterior side of the thus-formed package.

In an embodiment, the one or more perforations may comprise microperforations having an open area of below 1 square millimetre, preferably below 0.5 square millimetre, e.g. about 0.25 square millimetre. Such microperforations facilitate exchange of gases through the packaging material, but hinder contamination of the packed material from outside sources. Such microperforations may be made by (hot) needles. Laser perforation is an effective manner to provide such microperforations fast, reliable, food-safe, and in desired locations. Microperforations also tend not to significantly compromise integrity of the packaging material, in particular if the perforated packaging material comprises a polymeric film. Suitable films may range from a supple film to a rigid film for making a tray.

Laser drilled microperforations may be approximately round or oblong, having a (largest) diameter in a range of 50 - 500 micrometres, in particular in a range of 60 - 400 micrometres, preferably in a range of 90 - 300 micrometres, more preferably in a range of 100 - 250 micrometres such as in a range of 120 - 200 micrometres.

The packaging material preferably is biodegradable, preferably also compostable. This reduces waste. The material may even be not only environmentally friendly but also beneficiary if it provides nutrients to the soil. Biodegradability of the material may e.g. be determined according to EN 13432 and/or ASTM D6400.

In case the packaging material is a polymer film, the polymer may be manufactured from natural produce, e.g. from maize and/or potato starch, sugars, cellulose, tapioca, etc., and/or manufactured by substantially biological processes, e.g. fermentation processes using microorganisms.

Note that in this text, "natural produce" should be understood to mean that the produce (plants, algae, etc.) lived and was harvested and processed in the present time to provide a polymer material from which the film is made, and not earth oils etc. derived from natural produce growing millennia ago.

The polymer film may be laminate or, preferably, a single-layer and/or a single-component material, which may facilitate manufacture, may produce less waste and/or be better bio-degradable and which may reduce costs.

The package may contain at least one portion of respiring produce, in particular one or more vegetables, fruit, herbs, spices and/or flowers. The package may be stored with the produce kept fresh for prolonged periods. Alternatively, the package may be a wholesale package comprising plural retail portions of respiring produce.

In view of the preceding, in an aspect a method of manufacturing a package for preserving respiring produce is provided, The method comprises providing a portion of a packaging material, in particular a polymeric packaging material such as a polymer film;
providing a portion of the produce; and
forming, from the portion of packaging material and the portion of the produce, a closed package defining a package volume and containing in the package volume the portion of produce and a package atmosphere.

The method further comprises providing one or more perforations in the packaging material to determine a predetermined transmission rate of the package for at least one atmosphere component and forming the package into a Controlled Atmosphere Package (CAP).

The packaging material has a Water Vapour Transmission Rate (WVTR), a carbon dioxide transmission rate (CO₂TR) and an oxygen transmission rate (O₂TR), wherein the WVTR of the packaging material is in a range of 100 - 1200 ml/(m².24 hrs), the CO₂TR of the packaging material is larger than 1000 ml/(m².24 hrs) in particular larger than 5000 ml/ (m².24 hrs), in particular being in a range of 1000 - 15000 ml/(m².24 hrs) while being larger than 1000 ml/(m2.24 hrs), such as 5000 - 15000 ml/(m².24 hrs), and a ratio β = CO₂TR / O₂TR of the packaging material is larger than 4, and while larger than 4 in particular being in a range of 4 - 25, more in particular in a range 4 - 10, most preferably in a range 4 - 8, e.g. in a range 5 - 7.

In the method, the material is provided to manufacture the package; the perforations are made to determine a predetermined transmission rate of the package for at least one atmosphere component for thus forming the package into a Controlled Atmosphere Package (CAP). In the method, the one or more perforations are determined to provide an open area to regulate inflow and/or outflow of one or more atmosphere gases, in particular introduction of oxygen into the package and/or carbon dioxide from the package. In view of the high WVTR and CO₂TR, when determining the open area of the one or more perforations for controlling oxygen inflow, a significant amount of CO₂ and water may escape from the package, compared to prior art, therefore improving the package atmosphere. Thus, a higher degree of control over the oxygen inflow may be achieved. Moreover, contribution of CO₂ escape through the perforations may be neglected, further facilitating manufacturing CAP packages.

### BRIEF DESCRIPTION OF THE DRAWINGS

The above-described aspects will hereafter be more explained with further details and benefits with reference to the drawing showing an exemplary embodiment.
Fig. 1 schematically shows an embodiment of an apparatus and indicates at least part of an embodiment of a method;
Fig. 2 is a graph showing the results of Table II.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or molded as one piece), but including structures in which parts are attached by or as mated connectors, fasteners, releasable self-fastening features, etc. The verb "to facilitate" is intended to mean "to make easier and/or less complicated", rather than "to enable".

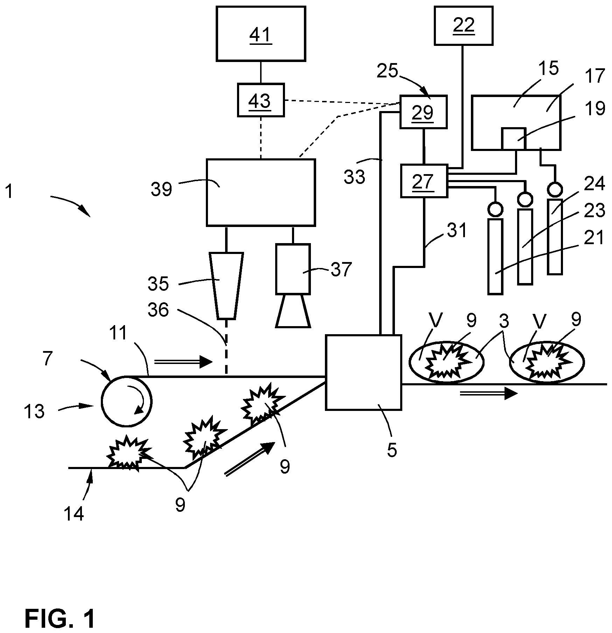

Fig 1. shows schematically an apparatus 1 for manufacturing modified atmosphere packages 3. The apparatus 1 comprises a package forming device 5 for forming, from portions of packaging material 7 and portions of produce 9, modified atmosphere packages 3 each defining a package volume V and containing in the package volume V a portion of produce 9 and a modified atmosphere. Here, the packaging material is supplied as a web of a packaging film 11 on a roll 13 for forming packaging portions, e.g. bags or tray lids, but other forms and types of packaging material are also possible; e.g. two or more types of packaging material may be provided, such as trays and sealing film (not shown). In Fig. 1 the produce is provided as separate portions 9 by a produce transporter 14, but other ways of providing the produce as, or into, portions 9 may be used. Here, the apparatus 1 is configured to form and fill the packages 3 and also to close and separate them.

The apparatus 1 comprises an optional supply of different atmosphere modification gases to provide the package as a MAP. E.g. CO₂ and N₂, here in the form of gas bottles 21, 23. The apparatus 1 here comprises an optional supply of pressurised air in the form of a compressor 22. The oxygen for ozone formation may be provided from a separate tank 24 as shown. The atmosphere modification gas(es) may be supplied pressurised so that they may be transported by flowing under their own pressure so that one or more propellers are not needed; however, these may be provided.

Here, the device 25 comprises a manifold 27 connected by a gas supply conduit 31 to the package forming device 5. The manifold 27 and an optional feedback sensor signal line 33 are connected to a controller 29.

As indicated in Fig. 1, the apparatus 1 further comprises a perforator, here a (possibly pulsed) laser 35 providing a (pulsed) laser beam 36, configured to provide the film 11 with microperforations. The apparatus 1 further comprises a camera 37 for imaging the microperforations and/or other control processes. The laser 35 and the camera 37 are operably connected with a perforation controller 39 for operational control, quality control and/or feedback control of the laser 35. The controller 39 may be programmable for determining one or more of the number, size and positions of the microperforations.

Further, not shown in any detail, the apparatus 1 may comprise a detector 41 and a calculator 43 configured to determine, e.g. by measuring and calculating on the basis of measurement results, one or more respiration properties, e.g. an O2 consumption and/or COz-production of the produce to be packaged and, based on that/those, determining one or more of a composition of the target modified atmosphere, a composition of the modifying atmosphere, a number and/or size of one or more microperforations (to be) made in the packaging material of the package(s).

### EXAMPLE 1

Transmission rate tests were performed on polymer film of 25 micrometre thickness made by extrusion from a blend of copolymers derived from potato starch, without plasticisers; the source materials were in accordance with EU Directive 2002/72/EG. The material was sold as a food-contact safe and biodegradable film material conform EN 13432 and ASTM D6400. The single-layer film was thermally weldable facilitating forming the packages as foil wraps, bags, seal trays, etc. Several samples were tested. All test samples were unperforated and intact.

The Water Vapour Transmission Rate (WVTR) of the film was determined in accordance with ISO 2528 (gravimetric method) at a test temperature of 38°C and a relative humidity of 90% rH. Three individual measurements were performed. The test results were 1037 g/(m².24 hrs), 1111 g/(m².24 hrs) and, respectively, 1071 g/(m².24 hrs), i.e. on average WVTR = 1073 g/(m².24 hrs) with a standard deviation of 37 g/(m².24 hrs). Compared to other films, this is a high WVTR.

The Oxygen Transmission Rate (O₂TR) of the film was determined in accordance with ASTM D3985 2556 (coulometric method) at a test temperature of 23°C. Three individual measurements were performed. The test results were 1609 ml/(m².24 hrs), 1602 ml/(m².24 hrs) and, respectively, 1595 ml/(m².24 hrs), i.e. on average O₂TR = 1602 ml/(m².24 hrs) with a standard deviation of 7 ml/(m².24 hrs).

The Carbon Dioxide Transmission Rate (CO₂TR) of the film was determined in accordance with ISO 2556 (manometric method) at a test temperature of 23°C. Three individual measurements were performed. The test results were 7675 ml/(m².24 hrs), 8195 ml/(m².24 hrs) and, respectively 8235 ml/(m².24 hrs), i.e. on average CO₂TR = 8035 ml/(m².24 hrs) with a standard deviation of 312 ml/(m².24 hrs).

The O₂TR of the film is therefore about 20% of the CO₂TR, or in other words, the ratio β = CO₂TR / O₂TR is about 5,0. Compared to other films, this is a high value.

Similarly, a film of 80 micrometers thickness of the material still has a WVTR of about 120 g/(m².24 hrs) and an O₂TR of about 750 ml/(m².24 hrs) and a CO₂TR of about 3750 ml/(m².24 hrs) at a ratio β of 5.

### COMPARATIVE EXAMPLES

A series of test packages were made. In these tests, various types of respiring produce were provided and packaged, using the apparatus and method described above, in different polymer foils as packaging material. Each package was formed as a CAP package by providing the respective packaging material with one or more microperforations of controlled size, together providing an open area of the microperforations determined to provide an optimized transmission rate of the package as whole for oxygen. The respective open area of each package was determined by measuring a respiration rate of the produce to be packed and taking into account the packaged amount of produce, the amount of packaging material, the volume of the produce in the package, the package volume (the two volumina enabling to determine the head space of the package). The CAP packages for each type produce were, after manufacturing, stored under refrigerated and controlled conditions. Shelf life, on the basis of produce quality, was determined by a test panel composed of appropriately trained and experienced persons.

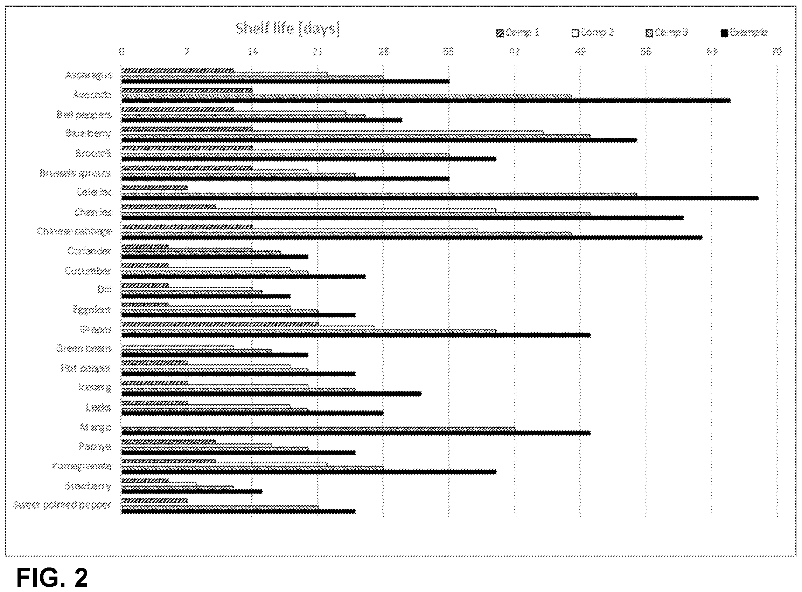

The tested materials are listed below in Table 1. The test results are listed in Table 2 and graphically presented in Fig. 2.

**TABLE 1: Specifications of packaging materials used in the tests of Table 2.**

| | Comp 1 | Comp 2 | Comp 3 | Example |
|---|---|---|---|---|
| Material | LDPE | Polyamide | Flexfresh | Copolymers |
| Thickness [micrometer] | 25 | 30 | 30 | 25 |
| WVTR [ml/(m².24 hrs)] | 5 | 60 | 180 | 1000 |
| O₂TR [ml/(m².24 hrs)] | 2000 | 20 | 1500 | 1600 |
| CO₂TR [ml/(m².24 hrs)] | 8000 | 60 | 4500 | 8000 |
| beta = CO2TR / O2TR | 4,0 | 3,0 | 3,0 | 5,0 |

**TABLE 2: Shelf life under optimum storage conditions of oxygen-optimized microperforated CAP packages with the packaging materials of Table 1 for various types of respiring produce, in days.**

| | Comp 1 | Comp 2 | Comp 3 | Example |
|---|---|---|---|---|
| Asparagus | 12 | 22 | 28 | 35 |
| Avocado | 14 | - | 48 | 65 |
| Bell Peppers | 12 | 24 | 26 | 30 |
| Blueberry | 14 | 45 | 50 | 55 |
| Broccoli | 14 | 28 | 35 | 40 |
| Brussels sprouts | 14 | 20 | 25 | 35 |
| Celeriac | 7 | - | 55 | 68 |
| Cherries | 10 | 40 | 50 | 60 |
| Chinese cabbage | 14 | 38 | 48 | 62 |
| Coriander | 5 | 14 | 17 | 20 |
| Cucumber | 5 | 18 | 20 | 26 |
| Dill | 5 | 14 | 15 | 18 |
| Eggplant | 5 | 18 | 21 | 25 |
| Grapes | 21 | 27 | 40 | 50 |
| Green beans | 0 | 12 | 16 | 20 |
| Hot pepper | 7 | 18 | 20 | 25 |
| Iceberg lettuce | 7 | 20 | 25 | 32 |
| Leeks | 7 | 18 | 20 | 28 |
| Mango | 0 | - | 42 | 50 |
| Papaya | 10 | 16 | 20 | 25 |
| Pomegranate | 10 | 22 | 28 | 40 |
| Stawberry | 5 | 8 | 12 | 15 |
| Sweet pointed pepper | 7 | - | 21 | 25 |

From these results the following becomes apparent:
The material of comparative example Comp 1 was LDPE, this is a standard fresh produce packaging material. Although LDPE has a combination of an average O₂TR, a high CO₂TR, and a high ratio β = CO₂TR / O₂TR of about 4,0, it has a very low WVTR. As a result, CAP packages of LDPE wherein the total open area of the microperforations is optimized with respect to the oxygen transmission rate of the package as a whole, provide a high relative humidity in the package atmosphere.

It is noted that to reduce the relative humidity in an LDPE-based package, additional and/or larger perforations could be made to increase the open area but this would degrade or destroy the oxygen control. Also or alternatively, hygroscopic and/or otherwise water-consuming materials could be added but this would increase costs and could not be allowable for reasons of hygiene and/or food safety. In the presented test series, no such measures going beyond mere packaging the produce in a perforated film as an oxygen-optimized CAP package were taken.

The material of comparative example Comp 2 was polyamide, which is another standard fresh produce packaging material. Although polyamide has a significantly higher WVTR than LDPE, it is a barrier material with very low O₂TR and CO₂TR, yet the value of its ratio β = CO₂TR / O₂TR of about 3,0 is average. As a result of the low O₂TR, CAP packages of polyamide require a very large open area of the microperforations (i.e. high number of perforations and/or large open area per perforation) to optimize the total open area with respect to the oxygen transmission rate of the package as a whole. Thus, the ratio of the transmission rates of the package as a whole of CO₂ and O₂, and therewith the flow ratio of CO₂:O₂ through the package is about 1 and the equilibrium concentration of carbon dioxide in the package atmosphere tends to be high. Due to the large open area of the microperforations, in spite of the low WVTR of the packaging material, the transmission rate for water vapour of the package as a whole is increased to provide a low relative humidity in the package atmosphere. The combined effect is an extended shelf life over LDPE-based CAP packages.

The material of comparative example Comp 3 was a state of the art packaging material sold by the company Uflex Limited under the brand name Flexfresh^{™} film. The material provides a significant improvement over LDPE and polyamide. It exhibits a comparably significantly higher WVTR, a moderate O₂TR but above average values of CO₂TR and of the ratio β. As a result, CAP packages of this material require comparably less open area of the microperforations to optimize the total open area with respect to the oxygen transmission rate of the package as a whole, while providing a larger transmission for water vapour and CO₂. The resultant packages provide a longer shelf life than those with LDPE and polyamide.

In CAP packages according to the presently provided insights, wherein the packaging material was that of Example 1, the packaging material has a combination of a very high WVTR, a moderate O₂TR and a high value of the ratio β = CO₂TR / O₂TR of about 5,0. Thus, in such CAP packages, the open area of the microperforations can be optimized for oxygen while the transmission rate for water and CO₂ of the package as a whole is very high. From the test results it will be evident that the shelf life of such CAP packages is significantly extended for all tested species of produce compared to the other packages.

The disclosure is not restricted to the above described embodiments which can be varied in a number of ways within the scope of the claims. For instance elements and aspects discussed in relation to a particular embodiment may be suitably combined with those of any other embodiment.

## Claims

1. A package for preserving respiring produce contained in the package, in particular vegetables, fruit, herbs, spices and/or flowers,
the package
defining a package volume for containing a portion of the produce and a package atmosphere, and
comprising a packaging material, in particular a polymer film (1A), provided with at least one perforation (3) enabling gas exchange with the atmosphere surrounding the package (1) to form the package into a Controlled Atmosphere Package (CAP),
wherein the packaging material has a Water Vapour Transmission Rate (WVTR), a carbon dioxide transmission rate (CO₂TR) and an oxygen transmission rate (O₂TR),
wherein the CO₂TR of the packaging material is larger than 1000 ml/(m².24 hrs), in particular being in a range of 1000 - 15000 ml/(m².24 hrs) while larger than 1000 ml/(m².24 hrs), and
a ratio β = CO₂TR / O₂TR of the packaging material is larger than 4, in particular being in a range of 4 - 25 while larger than 4, **characterised in that** the WVTR of the packaging material is in a range of 100 - 1200 ml/(m2.24 hrs).

2. The package according to claim 1, wherein the Water Vapour Transmission Rate (WVTR) of the packaging material is in a range of 100 - 1000 ml/(m².24 hrs).

3. The package according to claim 2, wherein the Water Vapour Transmission Rate (WVTR) of the packaging material is in a range of 150 - 800 ml/(m².24 hrs), more preferably in a range of 250 - 700 ml/(m².24 hrs), most preferably in a range of 400 - 600 ml/(m².24 hrs), or
wherein the Water Vapour Transmission Rate (WVTR) of the packaging material is in a range of 700-1100 ml/(m².24 hrs), more preferably in a range of 800 - 1100 ml/(m².24 hrs), most preferably in a range of 900 - 1000 ml/(m².24 hrs).

4. The package according to any preceding claim, wherein the carbon dioxide transmission rate (CO₂TR) of the packaging material is in a range of 1000 - 12000 ml/(m².24 hrs) while larger than 1000 ml/(m².24 hrs), preferably being in a range of 2000 - 10000 ml/(m².24 hrs), more preferably in a range of 4000 - 9000 ml/(m².24 hrs), most preferably in a range of 5000 - 8500 ml/(m².24 hrs).

5. The package according to any preceding claim, wherein the oxygen transmission rate (O₂TR) of the packaging material is in a range of 500 - 4000 ml/(m².24 hrs), preferably in a range of 750 - 4000 ml/(m².24 hrs), more preferably in a range of 900 - 3000 ml/(m².24 hrs), most preferably in a range of 1000 - 2500 ml/(m².24 hrs).

6. The package according to any preceding claim, wherein the ratio β = CO₂TR / O₂TR of the packaging material is, while being larger than 4, in a range of 4 - 20, more in particular in a range 4 - 10, most preferably in a range 4 - 8, e.g. in a range 5 - 7.

7. The package according to any preceding claim, wherein the packaging material is a polymer film having a thickness in a range of 10-200 micrometres, preferably in a range of 15-150 micrometres, more preferably in a range of 20-100 micrometres, most preferably in a range of 20-75 micrometres, e.g. in a range of 25-50 micrometres such as 25-40 micrometres.

8. The package according to any preceding claim, wherein the package is a Controlled Atmosphere Package (CAP), the at least one perforation being a microperforation, or being composed of a number of microperforations, having an open area of below 1 square millimetre, preferably below 0.5 square millimetre, e.g. about 0.25 square millimetre.

9. The package according to any preceding claim, wherein the packaging material is biodegradable, preferably also compostable.

10. The package according to any preceding claim, wherein the packaging material is a polymer film, the polymer being manufactured from natural produce and/or manufactured by substantially biological processes.

11. The package according to any preceding claim, containing at least one portion of respiring produce, in particular one or more of vegetables, fruit, herbs, spices and/or flowers.

12. Method of manufacturing a package for preserving respiring produce, comprising
providing a portion of a packaging material, in particular a polymeric packaging material such as a polymer film;
providing a portion of the produce;
forming, from the portion of packaging material and the portion of the produce, a closed package defining a package volume and containing in the package volume the portion of produce and a package atmosphere;
wherein the method comprises
providing one or more perforations in the packaging material to determine a predetermined transmission rate of the package for at least one atmosphere component and forming the package into a Controlled Atmosphere Package (CAP); and
wherein the packaging material has a Water Vapour Transmission Rate (WVTR), a carbon dioxide transmission rate (CO₂TR) and an oxygen transmission rate (O₂TR),
wherein the WVTR of the packaging material is in a range of 100 - 1200 ml/(m².24 hrs),
wherein CO₂TR of the packaging material is larger than 1000 ml/(m².24 hrs), in particular being in a range of 1000 - 15000 ml/(m².24 hrs) while being larger than 1000 ml/(m².24 hrs), and
a ratio β = CO₂TR / O₂TR of the packaging material is larger than 4, in particular being in a range of 4 - 25 while larger than 4.

## Patentansprüche

1. Verpackung zur Konservierung von in der Verpackung enthaltenen atmenden Erzeugnissen, insbesondere von Gemüse, Obst, Kräutern, Gewürzen und/oder Blumen,
wobei die Verpackung
ein Verpackungsvolumen zum Aufnehmen eines Teils der Erzeugnisse und eine Verpackungsatmosphäre definiert, und ein Verpackungsmaterial aufweist, insbesondere eine Polymerfolie (1A), die mit mindestens einer Perforation (3) versehen ist, die den Gasaustausch mit der die Verpackung (1) umgebenden Atmosphäre ermöglicht, um die Verpackung zu einer Verpackung mit kontrollierter Atmosphäre (CAP) zu machen,
wobei das Verpackungsmaterial eine Wasserdampf-Durchlässigkeitsrate (WVTR), eine Kohlendioxid-Durchlässigkeitsrate (CO₂TR) und eine Sauerstoff-Durchlässigkeitsrate (O₂TR) aufweist,
wobei die CO₂TR des Verpackungsmaterials größer als 1000 ml/(m².24 Std.) ist, insbesondere in einem Bereich von 1000 - 15000 ml/(m².24 Std.) liegt, während sie größer als 1000 ml/(m².24 Std.) ist, und
ein Verhältnis β = CO₂TR / O₂TR des Verpackungsmaterials größer als 4 ist, wobei es insbesondere in einem Bereich von 4 - 25 liegt, während es größer als 4 ist, **dadurch gekennzeichnet, dass** die WVTR des Verpackungsmaterials in einem Bereich von 100 - 1200 ml/(m².24 Std.) liegt.

2. Verpackung nach Anspruch 1, wobei die Wasserdampf-Durchlässigkeitsrate (WVTR) des Verpackungsmaterials im Bereich von 100 - 1000 ml/(m².24 Std.) liegt.

3. Verpackung nach Anspruch 2, wobei die Wasserdampf-Durchlässigkeitsrate (WVTR) des Verpackungsmaterials in einem Bereich von 150 - 800 ml/(m².24 Std.), besonders bevorzugt in einem Bereich von 250 - 700 ml/(m².24 Std.), ganz besonders bevorzugt in einem Bereich von 400 - 600 ml/(m².24 Std.) liegt, oder wobei die Wasserdampf-Durchlässigkeitsrate (WVTR) des Verpackungsmaterials in einem Bereich von 700 - 1100 ml/(m².24 Std.), besonders bevorzugt in einem Bereich von 800 - 1100 ml/(m².24 Std.), ganz besonders bevorzugt in einem Bereich von 900 - 1000 ml/(m².24 Std.) liegt.

4. Verpackung nach einem der vorhergehenden Ansprüche, wobei die Kohlendioxid-Durchlässigkeitsrate (CO₂TR) des Verpackungsmaterials in einem Bereich von 1000 - 12000 ml/(m².24 Std.) liegt, während sie größer als 1000 ml/(m².24 Std.) ist, wobei sie vorzugsweise in einem Bereich von 2000 - 10000 ml/(m².24 Std.), besonders bevorzugt in einem Bereich von 4000 - 9000 ml/(m².24 Std.), ganz besonders bevorzugt in einem Bereich von 5000 - 8500 ml/(m².24 Std.) liegt.

5. Verpackung nach einem der vorhergehenden Ansprüche, wobei die Sauerstoffdurchlässigkeit (O₂TR) des Verpackungsmaterials in einem Bereich von 500 - 4000 ml/(m².24 Std.), vorzugsweise in einem Bereich von 750 - 4000 ml/(m².24 Std.), besonders bevorzugt in einem Bereich von 900 - 3000 ml/(m².24 Std.), ganz besonders bevorzugt in einem Bereich von 1000 - 2500 ml/(m².24 Std.) liegt.

6. Verpackung nach einem der vorhergehenden Ansprüche, wobei das Verhältnis β = CO₂TR / O₂TR des Verpackungsmaterials, während es größer als 4 ist, in einem Bereich von 4 bis 20, insbesondere in einem Bereich von 4 bis 10, ganz besonders bevorzugt in einem Bereich von 4 bis 8, z.B. in einem Bereich von 5 bis 7 liegt.

7. Verpackung nach einem der vorhergehenden Ansprüche, wobei das Verpackungsmaterial eine Polymerfolie mit einer Dicke im Bereich von 10-200 Mikrometern, vorzugsweise in einem Bereich von 15-150 Mikrometern, besonders bevorzugt in einem Bereich von 20-100 Mikrometern, ganz besonders bevorzugt in einem Bereich von 20-75 Mikrometern, z.B. im Bereich von 25-50 Mikrometern, wie 25-40 Mikrometern, ist.

8. Verpackung nach einem der vorhergehenden Ansprüche, wobei die Verpackung eine Verpackung mit kontrollierter Atmosphäre (CAP) ist und wobei die mindestens eine Perforation eine Mikroperforation ist oder aus einer Anzahl von Mikroperforationen besteht, die eine offene Fläche von weniger als 1 Quadratmillimeter, vorzugsweise weniger als 0,5 Quadratmillimeter, z. B. etwa 0,25 Quadratmillimeter, aufweist.

9. Verpackung nach einem der vorhergehenden Ansprüche, wobei das Verpackungsmaterial biologisch abbaubar, vorzugsweise auch kompostierbar ist.

10. Verpackung nach einem der vorhergehenden Ansprüche, wobei das Verpackungsmaterial eine Polymerfolie ist, wobei das Polymer aus einem Naturprodukt hergestellt wird und/oder durch im Wesentlichen biologische Verfahren hergestellt wird.

11. Verpackung nach einem der vorhergehenden Ansprüche, die mindestens eine Portion von atmenden Erzeugnissen enthält, insbesondere eines oder mehrere von Gemüse, Obst, Kräutern, Gewürzen und/oder Blumen.

12. Verfahren zum Herstellen einer Verpackung zur Konservierung von atmenden Erzeugnissen, das aufweist:
Bereitstellen eines Abschnitts eines Verpackungsmaterials, insbesondere eines polymeren Verpackungsmaterials wie einer Polymerfolie;
Bereitstellen einer Portion der Erzeugnisse;
Bilden aus dem Abschnitt des Verpackungsmaterials und der Portion der Erzeugnisse einer geschlossenen Verpackung, die ein Verpackungsvolumen definiert und in dem Verpackungsvolumen die Portion der Erzeugnisse und eine Verpackungsatmosphäre enthält;
wobei das Verfahren aufweist:
Bereitstellen einer oder mehrerer Perforationen in dem Verpackungsmaterial, um eine vorbestimmte Durchlässigkeitsrate der Verpackung für mindestens eine Atmosphären-Komponente zu bestimmen, und das Bilden der Verpackung zu einer Verpackung mit kontrollierter Atmosphäre (CAP); und wobei das Verpackungsmaterial eine Wasserdampf-Durchlässigkeitsrate (WVTR), eine Kohlendioxid-Durchlässigkeitsrate (CO₂TR) und eine Sauerstoff-Durchlässigkeitsrate (O₂TR) aufweist, wobei die WVTR des Verpackungsmaterials in einem Bereich von 100 - 1200 ml/(m² .24 h) liegt,
wobei CO₂TR des Verpackungsmaterials größer als 1000 ml/(m².24 Std.) ist, insbesondere in einem Bereich von 1000 - 15000 ml/(m².24 Std.) liegt, während es größer als 1000 ml/(m².24 Std.) ist, und
ein Verhältnis β = CO₂TR / O₂TR des Verpackungsmaterials größer als 4 ist, insbesondere in einem Bereich von 4 - 25 liegt und größer als 4 ist.

## Revendications

1. Emballage pour conserver des produits respirants contenus dans l'emballage, en particulier des légumes, des fruits, des herbes, des épices et/ou des fleurs,
l'emballage
définissant un volume d'emballage pour contenir une partie du produit et l'atmosphère d'emballage, et
comprenant un matériau d'emballage, en particulier un film polymère (1A) pourvu d'au moins une perforation (3) permettant un échange gazeux avec l'atmosphère entourant l'emballage (1) pour former l'emballage dans un emballage à atmosphère contrôlée (CAP),
dans lequel le matériau d'emballage a un taux de transmission de vapeur d'eau (WVTR), un taux de transmission de dioxyde de carbone (CO₂TR) et un taux de transmission d'oxygène (O₂TR),
dans lequel le CO₂TR du matériau d'emballage est supérieur à 1000 ml/(m².24h), se trouvant en particulier dans une plage de 1000 à 15 000 ml/(m².24h) tout en étant supérieur à 1000 ml/(m².24h), et
un rapport β = CO₂TR/O₂TR du matériau d'emballage est supérieur à 4, se trouvant en particulier dans une plage de 4 à 25 tout en étant supérieur à 4, **caractérisé en ce que** le WVTR du matériau d'emballage est dans une plage de 100 à 1200 ml/ (m².24h).

2. Emballage selon la revendication 1, dans lequel le taux de transmission de vapeur d'eau (WVTR) du matériau d'emballage est dans une plage de 100 à 1000 ml/(m².24h).

3. Emballage selon la revendication 2, dans lequel le taux de transmission de vapeur d'eau (WVTR) du matériau d'emballage est dans une plage de 150 à 800 ml/(m².24h), de manière davantage préférée dans une plage de 250 à 700 ml/(m².24h), de manière préférée entre toutes dans une plage de 400 à 600 ml/(m².24h), ou
dans lequel le taux de transmission de vapeur d'eau (WVTR) du matériau d'emballage est dans une plage de 700 à 1100 ml/(m².24h), de manière davantage préférée dans une plage de 800 à 1100 ml/(m².24h), de manière préférée entre toutes dans une plage de 900 à 1000 ml/(m².24h).

4. Emballage selon l'une des revendications précédentes, dans lequel le taux de transmission de dioxyde de carbone (CO₂TR) du matériau d'emballage est dans une plage de 1000 à 12 000 ml/ (m².24h) tout en étant supérieur à 1000 ml/(m².24h), se trouvant de préférence dans une plage de 2000 à 10 000 ml/(m².24h), de manière davantage préférée dans une plage de 4000 à 9000 ml/(m².24h), de manière préférée entre toutes dans une plage de 5000 à 8500 ml/ (m².24h).

5. Emballage selon l'une des revendications précédentes, dans lequel le taux de transmission d'oxygène (O₂TR) du matériau d'emballage est dans une plage de 500 à 4000 ml/(m².24h), de préférence dans une plage de 750 à 4000 ml/(m².24h), de manière davantage préférée dans une plage de 900 à 3000 ml/(m².24h), de manière préférée entre toutes dans une plage de 1000 à 2500 ml/(m².24h).

6. Emballage selon l'une des revendications précédentes, dans lequel le rapport β = CO₂TR/O₂TR du matériau d'emballage, tout en étant supérieur à 4, est dans une plage de 4 à 20, plus particulièrement dans une plage 4 à 10, de manière préférée entre toutes dans une plage de 4 à 8, par exemple dans une plage de 5 à 7.

7. Emballage selon l'une des revendications précédentes, dans lequel le matériau d'emballage est un film polymère ayant une épaisseur dans une plage de 10 à 200 micromètres, de préférence dans une plage de 15 à 150 micromètres, de manière davantage préférée dans une plage de 20 à 100 micromètres, de manière préférée entre toutes dans une plage de 20 à 75 micromètres, par exemple dans une plage de 25 à 50 micromètres, comme de 25 à 40 micromètres.

8. Emballage selon l'une des revendications précédentes, dans lequel l'emballage est un emballage à atmosphère contrôlée (CAP), l'au moins une perforation est une microperforation ou est composée d'un nombre de microperforations ayant une zone ouverte inférieure à 1 millimètre carré, de préférence inférieure à 0,5 millimètre carré, par exemple d'environ 0,25 millimètre carré.

9. Emballage selon l'une des revendications précédentes, dans lequel le matériau d'emballage est biodégradable, de préférence également compostable.

10. Emballage selon l'une des revendications précédentes, dans lequel le matériau d'emballage est un film polymère, le polymère étant fabriqué à partir de produits naturels et/ou fabriqué par des processus sensiblement biologiques.

11. Emballage selon l'une des revendications précédentes, contenant au moins une partie d'un produit respirant, en particulier un ou plusieurs parmi des légumes, des fruits, des herbes, des épices et/ou des fleurs.

12. Procédé de fabrication d'un emballage pour conserver des produits respirants, comprenant
la fourniture d'une partie d'un matériau d'emballage, en particulier d'un matériau d'emballage polymère tel qu'un film polymère ;
la fourniture d'une partie du produit ;
la formation, à partir de la partie de matériau d'emballage et de la partie du produit, d'un emballage fermé définissant un volume d'emballage et contenant la partie de produit et l'atmosphère d'emballage dans le volume d'emballage ;
dans lequel le procédé comprend
la fourniture d'une ou plusieurs perforations dans le matériau d'emballage pour déterminer un taux de transmission prédéterminé de l'emballage pour au moins un composant atmosphérique, et la formation de l'emballage dans un emballage à atmosphère contrôlée (CAP) ; et
dans lequel le matériau d'emballage a un taux de transmission de vapeur d'eau (WVTR), un taux de transmission de dioxyde de carbone (CO₂TR) et un taux de transmission d'oxygène (O₂TR),
dans lequel le WVTR du matériau d'emballage est dans une plage de 100 à 1200 ml/(m².24h),
dans lequel le CO₂TR du matériau d'emballage est supérieur à 1000 ml/(m².24h), se trouvant en particulier dans une plage de 1000 à 15 000 ml/(m².24h) tout en étant supérieur à 1000 ml/(m².24h), et
un rapport β = CO₂TR/O₂TR du matériau d'emballage est supérieur à 4, se trouvant en particulier dans une plage de 4 à 25 tout en étant supérieur à 4.
